# EUROPEAN PATENT APPLICATION

(11) **EP 4 431 262 A1**
(43) Date of publication of application: **18.09.2024**
(21) Application number: 24163020.1
(22) Date of filing: 12.03.2024
(51) Int. Cl.: B29C 51/00, B32B 1/00, F28D 21/00, F28D 9/00, F28F 21/06, F28F 3/04, F28F 9/02

(54) **PROCESS FOR MANUFACTURE OF HEAT EXCHANGER**

(30) Priority: 13.03.2023 NL 2034333
(71) Applicant: Brink Climate Systems B.V., 7951 SN Staphorst (NL)
(72) Inventor: Strijdveen, Gerardus Wilhelmus Johannes, 8107 BM Broekland (NL); ter Horst, Klaas, 7692 AH Mariënberg (NL)
(74) Representative: Nederlandsch Octrooibureau

(57) **Abstract**

The current invention relates to a heat-exchange apparatus configured for heat and humidity transfer between supply air and exhaust air, the apparatus comprising a core having a plurality of water vapor-permeable sheets separating the supply air and exhaust air and wherein the plurality of water vapor-permeable sheets are stacked to form a corresponding plurality of conduits, wherein each conduit of the plurality of conduit is formed between two adjacent water vapor-permeable sheets of the plurality of water vapor-permeable sheets, the method comprising a step of;
- providing a sheet of the plurality of water vapor-permeable sheets, having a sheet thickness less than 0,5 mm, preferably between 0,2 mm and 0,35 mm, and
- folding the sheet to form a pleat extending across the sheet, wherein the pleat comprises a pleat radius greater than 0,2 mm, preferably between 0,2 mm and 0,3 mm.

## Description

### Field of the invention

The present invention relates to a Method for manufacturing a heat-exchange apparatus configured for heat and humidity transfer between supply air and exhaust air, the apparatus comprising a core having a plurality of water vapor-permeable sheets separating the supply air and exhaust air and wherein the plurality of water vapor-permeable sheets are stacked to form a corresponding plurality of conduits, wherein each conduit of the plurality of conduits is formed between two adjacent water vapor-permeable sheets of the plurality of water vapor-permeable sheets.

### Background art

WO2018020392A1 provides enthalpy exchanger elements and enthalpy exchangers comprising such elements as well as a method for producing such enthalpy exchanger elements and enthalpy exchangers. The method has the steps of a) providing an air-permeable sheet element laminating one side of the sheet element with a thin polymer film with water vapor transmission characteristics; and c) forming the laminated sheet element (1) into a desired shape exhibiting a three-dimensional corrugation pattern.

In ventilation technology, there are two types of heat exchangers; recuperative and regenerative. The recuperative heat exchanger only transfers heat where the regenerative heat exchanger also transfers moisture. The latter is also called an 'Enthalpy' heat exchanger. Known enthalpic heat exchangers are produces with a membrane which is stacked in between two plastic plates. This requires a cumbersome production process.

### Summary of the invention

An object of the current invention is to provide an improved method for manufacturing a heat-exchange apparatus.

The present invention therefore provides a method for manufacturing a heat-exchange apparatus configured for heat and humidity transfer between supply air and exhaust air, the apparatus comprising a core having a plurality of water vapor-permeable sheets separating the supply air and exhaust air and wherein the plurality of water vapor-permeable sheets are stacked to form a corresponding plurality of conduits, wherein each conduit of the plurality of conduits is formed between two adjacent water vapor-permeable sheets of the plurality of water vapor-permeable sheets, the method comprising a step of;
- providing a sheet of the plurality of water vapor-permeable sheets, having a sheet thickness less than 0,5 mm, preferably between 0,2 mm and 0,35 mm, and
- folding the sheet to form a pleat extending across the sheet, wherein the pleat comprises a pleat radius greater than 0,2 mm, preferably between 0,2 mm and 0,3 mm.

The thickness and pleat radius requirement enable to use a thin and pleated sheet with optimal heat transfer capabilities combined with limited strain to the sheet material during or caused by the step of folding the sheet. The strain is limited also because of a better distribution of strain across the sheet. The limited strain reduces possible leakage through a sheet because of damage to the sheet during the manufacturing process is prevented as much as possible, in particular during the step of folding the sheet. The limitation of strain is important since, forming the thin sheet is limited by strain capabilities of the sheet material. Strain means relative deformation in a direction. In this case in particular deformation in a length direction of the sheet is relevant.

Providing a pleated sheet for heat exchangers is known per se. Such a pleated sheet has increased surface available for heat transfer as each pleat provides associated folded sheet sections.

In other words, according to the invention, an enthalpic heat exchanger is provided which can be produced without separate support in the form of plastic plates. Instead, to ensure a stiff heat exchanger core a multi layer material is developed. This material comprises a membrane, which can transfer moisture, and a nonwoven thermoplastic support layer that provides stiffness to the sheets.

In an embodiment of the method according to the invention, the sheet comprises a water vapor permeable membrane, and a support layer comprising a non-woven thermoplastic polymer material to support the water vapor permeable membrane and to provide stiffness to the sheet. The support layer comprising a non-woven thermoplastic polymer material provides stiffness to the sheet while the sheet is still being formable by thermoforming. The polymer can be any suitable thermoplastic polymer material like for example PET. The support layer may comprise the non-woven thermoplastic polymer material in the form of fibers or in any other suitable form. It will be clear that the support layer will be water vapor permeable and/or even water permeable.

In an embodiment of the method according to the invention, a membrane thickness is more than 0,03 mm, prefereably about 0,04 mm, more preferably between 0,03 mm and 0,06 mm This membrane thickness is all the more advantageous with respect to strain to the sheet material. In other words, this membrane thickness improves an operational window with respect to strain to the sheet material.

In an embodiment of the method according to the invention, the sheet thickness and the pleat radius have a ratio between 0,1 and 5, prefereably a ratio between 0,5 and 2,5. The given ratio all the more reduces strain and/or distributes strain along the sheet.

In an embodiment of the method according to the invention, the method comprises providing the sheet with at least three pleats to form a triangular shape in cross section, wherein a base width of the triangular shape and a length of a leg of the triangular shape have a ratio between 0,8 and 1,3. The given ratio all the more reduces strain and/or distributes strain along the sheet. Moreover, the given ratio provides an optimum with respect to strain and thermal transfer. The triangular shape results in less pleats per effective surface available for thermal transfer. A ratio above 1,3 increase the change of leakage through a sheet, normally at a pleat. A ratio below 0,8 results in a low thermal performance. In other words, the triangular shape and ratio imposes less strain demands to the sheet 4.

In an embodiment of the method according to the invention, the pleat comprises angled sections to form a zigzag pattern in a length direction of the pleat. This increases the stiffness of the sheet with respect to out of plane deformation.

In an embodiment of the method according to the invention, the sheet comprises a plurality of parallel pleats. The number of pleats all the more increase the effective surface area available for thermal transfer and increases the stiffness of the sheet with respect to out of plane deformation. Preferably, the plurality of parallel pleats is evenly distributed across the sheet. It will be clear that the number of pleats is normally chosen as high as possible.

In an embodiment of the method according to the invention, the method comprises providing a welding area at opposite sides of both of two adjacent sheets, stacking the two sheets and connecting the two sheets by welding the associated welding areas to form a conduit between the two sheets. Welding the sheets at opposite sides provides a simple and robust process as well as assembly of two adjacent sheet. It will be clear that every pair of adjacent sheets does form a conduit.

In the geometry of the sheets associated welding areas are defined. This area is needed to weld sheets together. A heat exchanger comprises multiple sheets stacked in an alternating manner.

In an embodiment of the method according to the invention, the method comprises shaping a sheet by a thermoforming process. The thermoforming process is well known per se. In this case of thin sheets, the thermoforming process improves the allowable strain during the folding process.

In an embodiment of the method according to the invention, the step of shaping a sheet by a thermoforming process comprises shaping sheets between at least two complementary mould parts. The use of two mould parts enables to heat the sheet with one of the two complementary mould parts and cool with the other of the two complementary mould parts.

In an embodiment of the method according to the invention, at least one of the at least two complementary mould parts comprise a shaping surface made of plastic material. The plastic material has a low heat conduction which means that the temperature of the shaping surface made of plastic material is stable and the shaping surface made of plastic material will not transfer much heat to the sheet. Therefore, the shaping surface made of plastic material enables a constant and stable manufacturing process. It is conceivable that the one of the at least two complementary mould parts is made of plastic material.

In an embodiment of the method according to the invention, the shaping surface made of plastic material faces the water vapor permeable membrane during the shaping of the sheet by the thermoforming process. This reduces the thermal stress to the membrane since the shaping surface made of plastic material has a constant temperature and a low heat transfer.

Thermoforming is used to make a formed plate out of the multi layer enthalpic material, that is the sheet. During this process, the sheet is heated above a melting point. In the next step the material is cooled down under the melting point, in this case by an upper and lower mold part. The mold is mechanically pressed together and with an over pressure and vacuum the material is pressed against the mold walls. In the mold a geometry imposed onto the sheet which makes the sheet stiffer. The non-woven material of the sheet is used during this process to obtain a stiff sheet. In following steps, the sheet may be cut, and is stacked to obtain a high number of sheets that form a core.

In an embodiment of the method according to the invention, the maintaining at least the other of the at least two mould parts at a determined working temperature. This enables to solidify the sheet into a desired shape. This is combination with the one mould part comprising the shaping surface made of plastic material, enable to slowly heat the sheet and then after the heat is distributed across the sheet, commence cooling the sheet with the other of the two mould parts.

In an embodiment of the method according to the invention, the step of maintaining the other mould part at a determined working temperature comprises cooling and wherein the other mould part faces the support layer comprising a non-woven thermoplastic polymer material. This all the more facilitates to solidify the sheet into a desired shape since the carrier sheet is cooled effectively.

In an embodiment of the method according to the invention, the method comprises the steps of;
- first preforming and heating the sheet by contacting the water vapor permeable membrane with the at least one of the at least two complementary mould parts, in particular with the shaping surface made of plastic material, and then
- forming the sheet into a final shape and cooling the sheet by closing the at least two complementary mould parts and contacting the support layer comprising a non-woven thermoplastic polymer material with the other mould part.

In an embodiment of the method according to the invention, the step of preforming and heating the sheet comprises applying an under-pressure to the one mould part.

The invention further relates to a heat-exchange apparatus obtained by the method according to the invention.

The invention further relates to a use of a heat exchange apparatus obtained by the method according to the invention in a ventilation system for a building.

The invention further relates to a ventilation system comprising a heat exchange apparatus obtained by the method according to the invention.

### Short description of drawings

The present invention will be discussed in more detail below, with reference to the attached drawings, in which
fig. 1 shows a sheet in perspective view of a heat-exchange apparatus, wherein the sheet is obtained by the method according to the invention;
fig. 2 is a top view of the sheet of fig. 1;
fig. 3 is a side view in cross section of the sheet of fig. 1;
fig. 4 is a detail of the sheet of fig. 1 in side view in cross section;
fig. 5A is a stack of three sheets of fig. 1;
fig. 5B is an exploded view of fig. 5A;
fig 6 is a schematic view of a heat exchange apparatus according to the invention; and
fig. 7 is a detail of a mould in side view in cross section, for use in the method according to the invention.

### Description of embodiments

The present invention will be discussed in more detail below, with reference to all the attached drawings, that relate to a sheet, a stack of sheet, a heat exchange apparatus and a mould for use for use in the method according to the invention.

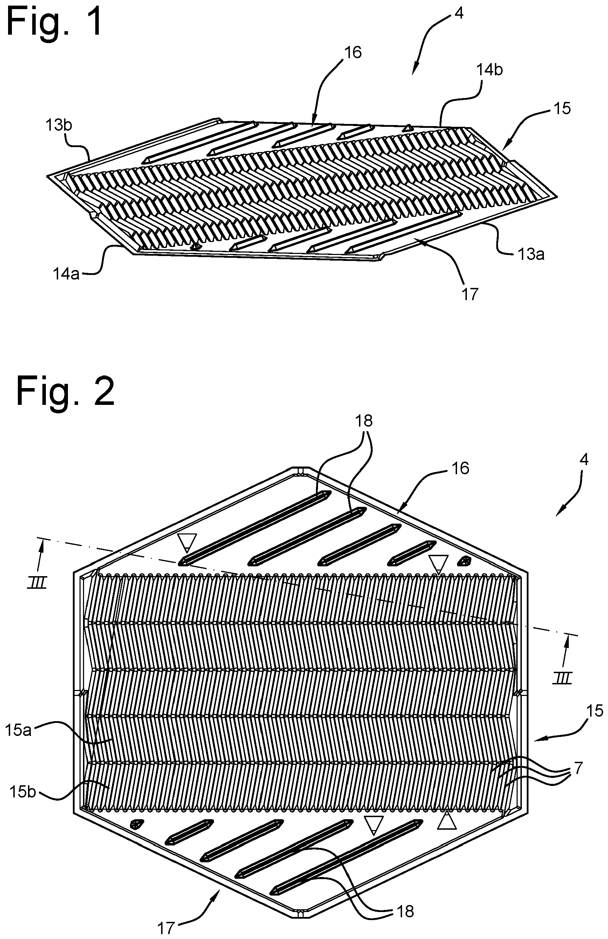

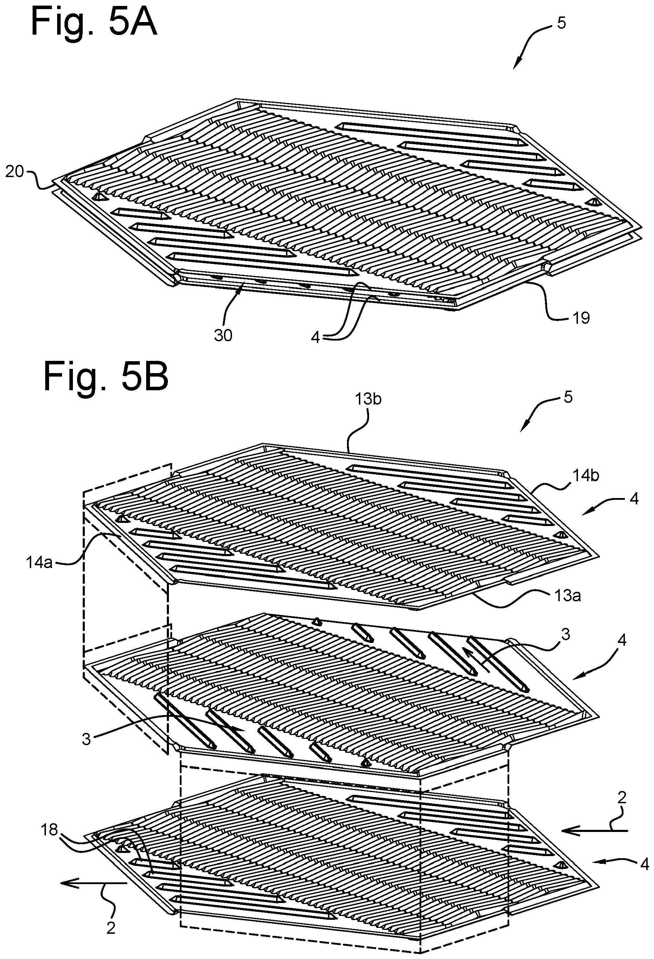

Fig. 1 - 3 shows a sheet 4 in different views. The sheet 4 has a an inlet section 16, a heat transfer section 15 as well as an outlet section 17. The heat transfer section 15 is corrugated and has a plurality of pleats 7. The pleat 7 extends across a portion of the sheet in this case, however it is conceivable that the pleat 7 extends across at least the entire heat transfer section 15 of the sheet. In this case, the pleat 7 comprises angled sections 15a, 15b. In other words, the pleat extends across an angled section. The sections 15a, 15b do form a zigzag pattern in a length direction of the pleat 7. This provides additional stiffness to the sheet 4 while still allowing sufficient flow through a conduit 30 as shown in fig. 5A.

The inlet section 16 as well as the outlet section 17 has guiding profiles 18 to guide the supply air 2 and exhaust air 3, respectively. The inlet section 16 as well as the outlet section has guiding profiles 18 to provide an even flow of air. The inlet section 16 as well as the outlet section 17 facilitate to distribute the flow of air across a width of the heat transfer section 15 to optimize heat transfer.

The sheet 4 is provided with welding areas 13a, 13b, 14a, 14b. The welding areas 13a, 13b, 14a, 14b are arranged at opposite sides the sheet 4.

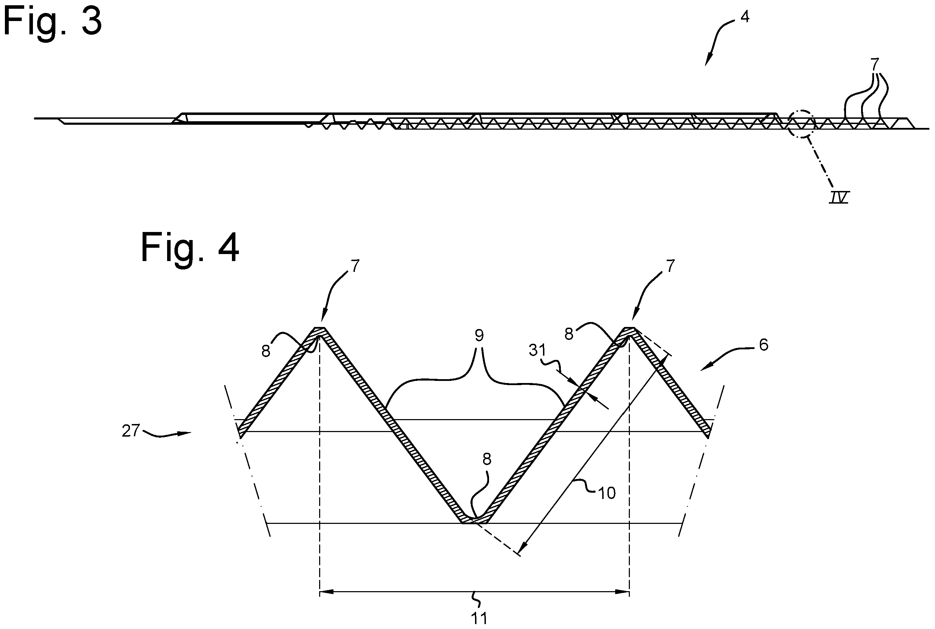

Fig. 4 is a detail of the sheet of fig. 1 in side view in cross section. The method for manufacturing a heat-exchange apparatus 1 comprises a step of providing a sheet 4 of the plurality of water vapor-permeable sheets 4. The sheet has a sheet thickness 31 less than 0,5 mm. Preferably the sheet thickness 31 is between 0,2 mm and 0,35 mm.

The method for manufacturing a heat-exchange apparatus 1 comprises a step of folding the sheet 4. The step of folding a sheet 4 forms a pleat 7 across the sheet. The pleat 7 extends across a portion of the sheet in this case. Importantly, the pleat comprises a pleat radius 8 greater than 0,2 mm. The pleat radius 8 is preferably between 0,2 mm and 0,3 mm.

The sheet thickness 31 and the pleat radius 8 have a ratio between 0,5 and 2,5.

The method for manufacturing a heat-exchange apparatus 1 comprises a step of providing the sheet 4 with at least three pleats 7. These three pleats enable to form a triangular shape in cross section. The triangular shape has a base width 11 and a length 10 of a leg. The base width 11 and the length 10 of the leg have a ratio between 0,8 and 1,3. As shown, the sheet 4 is a corrugated sheet and has a plurality of pleats 7 and a corresponding number of triangular shapes, or even better V-shapes. Thus, the sheet 4 comprises a plurality of parallel pleats 7. The plurality of parallel pleats 7 are evenly distributed across the sheet 4.

Fig. 5A and 5B show a stack 5 of three sheets 4. The method for manufacturing a heat-exchange apparatus 1 comprises providing a welding area 13a, 13b, 14a, 14b. The welding areas 13a, 13b, 14a, 14b are arranged at opposite sides of both of two adjacent sheets 4. The method comprises the step of stacking sheets 4 and connecting two sheets by welding the associated welding areas 13a, 13b, 14a, 14b to form a conduit 30 between the two sheets 4. Associated welding areas between the two sheets 4 are shown with dashed lines at the front of the stack 5 as shown only. The welding connection constitutes an associated inlet 16 or outlet 17. The welding area alternates from sheet 4 to sheet to form the stack 5. This structure of a stack 5 is known per se. A plenum connects all associated inlets 16, and at an opposed sides of the core 29, another plenum connects all associated outlets 17. This structure of a stack 5 having plenums is known per se.

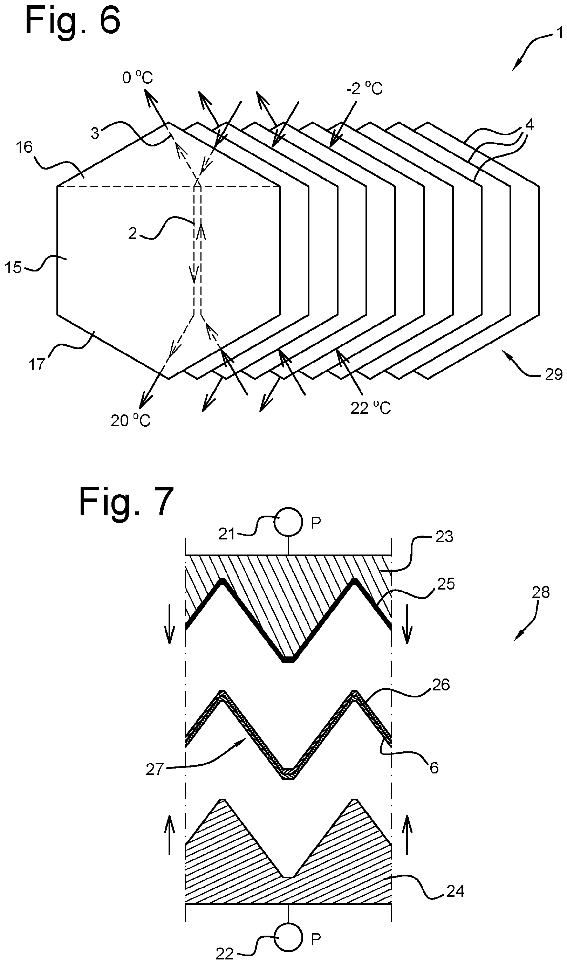

Fig. 6 is a schematic view of a heat exchange apparatus 1 according to the invention. The heat-exchange apparatus 1 is obtained by the method according to the invention. The core is normally accommodate in a housing (not shown) that provides access to the inlets 16 an outlets 17.

Such a heat-exchange apparatus 1 comprises a plurality of sheets 4. The plurality of sheets 4 form a core 29 of a stack of the plurality of sheets 4. Between each two adjacent sheets 4, a conduit 30 is formed. In other words, on opposite sides of each sheet 4, different conduits are formed 30. Such a core 29 is known per se for a heat-exchange apparatus 1.

The heat-exchange apparatus 1 is configured for heat and humidity transfer between supply air 2 and exhaust air 3. The apparatus comprises a core 29. The core 29 has a plurality of water vapor-permeable sheets 4. The sheets 4 separate the supply air 2 and exhaust air 3. Therefore, the plurality of water vapor-permeable sheets 4 are stacked to form a corresponding plurality of conduits 30. Each conduit 30 of the plurality of conduit is formed between two adjacent water vapor-permeable sheets 4.

Fig. 7 is a detail of a mould in side view in cross section, for use in the method according to the invention.

Only a section 27 of the sheet 4 is shown. The sheet 4 comprises a water permeable membrane 26. In this case, a membrane thickness is about 0,04 mm. The sheet 4 comprises a support layer 6. The support layer comprises a non-woven thermoplastic polymer material, in this case a PET material. The support layer 6 is configured to support the water vapor permeable membrane 26 and to provide stiffness to the sheet 4.

The method for manufacturing a heat-exchange apparatus 1 comprises shaping a sheet 4 by a thermoforming process. The step of shaping a sheet 4 by a thermoforming process comprises shaping the sheet 4 between two complementary mould parts 23, 24. Only a section 27 of the sheet 4 is shown with the corresponding sections of the mould parts 23, 24.

In this case, one of two complementary mould parts comprises a shaping surface 25 made of plastic material. The shaping surface 25 made of plastic material faces the water vapor permeable membrane 26 during the shaping of the sheet 4 by the thermoforming process. It is conceivable that the one part 23 is made of a plastic material.

The method for manufacturing a heat-exchange apparatus 1 comprises maintaining at least the other 24 of the two mould parts at a determined working temperature. The step of maintaining the other mould part 24 at a determined working temperature comprises cooling. The other mould part 24 faces the support layer 6 comprising a non-woven thermoplastic polymer material.

The method for manufacturing a heat-exchange apparatus 1 comprises first preforming and heating the sheet 4. Only a section 27 of the sheet 4 is shown with the corresponding sections of the mould parts 23, 24. It will be clear that the section 27 is shown in a formed or preformed state. The sheet 4 is heated by contacting the water vapor permeable membrane 25 with the one 23 of the two complementary mould parts. The sheet 4 is heated in particular by contacting with the shaping surface 25 made of plastic material. The step of preforming and heating the sheet 4 comprises in this case applying an under-pressure to the one mould part 23. The under-pressure is applied with a source of under-pressure 21.

After first preforming and heating the sheet 4, the sheet 4 is formed into a final shape by closing the two complementary mould parts 23, 24. Upon contacting the support layer 6 with the other mould part 24, the sheet is cooled. Thus, the cooling of the sheet 4 commences by closing the two complementary mould parts 23, 24 and contacting the support layer 6 comprising a non-woven thermoplastic polymer material with the other mould part 24.
The forming of the sheet 4 into the final shape may be assisted by applying pressure. The pressure is applied with a source of pressure 22 associated with the other mould part 24. The pressure is increase as fast as possible like for example to 4 - 6 bar in 0,1 seconds.

The present invention has been described above with reference to a number of exemplary embodiments as shown in the drawings. Modifications and alternative implementations of some parts or elements are possible, and are included in the scope of protection as defined in the appended claims.

## Claims

1. Method for manufacturing a heat-exchange apparatus (1) configured for heat and humidity transfer between supply air (2) and exhaust air (3), the apparatus comprising a core (29) having a plurality of water vapor-permeable sheets (4) separating the supply air and exhaust air and wherein the plurality of water vapor-permeable sheets are stacked to form a corresponding plurality of conduits (30), wherein each conduit of the plurality of conduit is formed between two adjacent water vapor-permeable sheets (4) of the plurality of water vapor-permeable sheets,
the method comprising a step of;
- providing a sheet of the plurality of water vapor-permeable sheets, having a sheet thickness (31) less than 0,5 mm, preferably between 0,2 mm and 0,35 mm, and
- folding the sheet to form a pleat (7) extending across the sheet, wherein the pleat comprises a pleat radius (8) greater than 0,2 mm, preferably between 0,2 mm and 0,3 mm.

2. Method according to claim 1, wherein the sheet comprises a water permeable membrane (26), and a support layer (6) comprising a non-woven thermoplastic polymer material to support the water vapor permeable membrane and to provide stiffness to the sheet (4).

3. Method according to claim 2, wherein a membrane thickness is more than 0,03 mm, prefereably about 0,04 mm, more preferably between 0,03 mm and 0,06 mm.

4. Method according to any preceding claim, wherein the sheet thickness and the pleat radius have a ratio between 0,1 and 5, prefereably a ratio between 0,5 and 2,5.

5. Method according to any preceding claim, comprising providing the sheet with at least three pleats (7) to form a triangular shape in cross section, wherein a base width (11) of the triangular shape and a length (10) of a leg of the triangular shape have a ratio between 0,8 and 1,3.

6. Method according to any preceding claim, wherein the pleat (7) comprises angled sections (15a, 15b) to form a zigzag pattern in a length direction of the pleat.

7. Method according to any preceding claim, comprising providing a welding area (13a, 13b, 14a, 14b) at opposite sides of both of two adjacent sheets, stacking the two sheets and connecting the two sheets by welding the associated welding areas to form a conduit between the two sheets.

8. Method according to any preceding claim, comprising shaping a sheet by a thermoforming process.

9. Method according to any preceding claim, wherein the step of shaping a sheet by a thermoforming process comprises shaping sheets between at least two complementary mould parts (23, 24).

10. Method according to claim 9, wherein at least one of the at least two complementary mould parts comprises a shaping surface (25) made of plastic material.

11. Method according to a preceding claim 9 or 10, wherein the shaping surface (25) made of plastic material faces the water vapor permeable membrane (26) during the shaping of the sheet (4) by the thermoforming process.

12. Method according to any preceding claim 9 - 11, comprising maintaining at least the other (24) of the at least two mould parts at a determined working temperature.

13. Method according to any preceding claim 9 - 12, wherein the step of maintaining the other mould part at a determined working temperature comprises cooling and wherein the other mould part faces the support layer (6) comprising a non-woven thermoplastic polymer material.

14. Method according to any preceding claim 9 - 11, comprising
- first preforming and heating the sheet by contacting the water vapor permeable membrane with the at least one of the at least two complementary mould parts, in particular with the shaping surface made of plastic material, and then
- forming the sheet into a final shape and cooling the sheet by closing the at least two complementary mould parts and contacting the support layer comprising a non-woven thermoplastic polymer material with the other mould part.

15. Method according to claim 14, wherein the step of preforming and heating the sheet comprises applying an under-pressure to the one mould part.
